# EUROPEAN PATENT APPLICATION

(11) **EP 0 878 419 A1**
(43) Date of publication of application: **18.11.1998**
(21) Application number: 98201516.6
(22) Date of filing: 13.05.1998
(51) Int. Cl.: B65G 17/08

(54) **Multiple bend segment for a chain conveyor.**

(30) Priority: 16.05.1997 NL 1006082
(71) Applicant: MCC Nederland B.V., NL-2691 GV 's-Gravenzande (NL)
(72) Inventor: van Zijderveld, George Johannes, 2691 CN 's-Gravenzande (NL)
(74) Representative: Smulders, Theodorus A.H.J., Ir.

(57) **Abstract**

A multiple bend segment for a chain conveyor comprising conveyor chains movable over a plurality of parallel conveyor tracks including at least one bend zone, the bend segment consisting of a number of adjacent, substantially U-shaped plastic sections forming one whole (21), the legs (23,24) of each U-shaped section forming the rails over which a chain can move, the bend segment further comprising, for each of the conveyor chains, a return part (22) located under a respective U-shaped section and having a substantially inverted U-shape, the legs (25,26) of the U including slots for guiding the bearing surfaces of the returning portion of the conveyor chain. According to the invention, the centerlines (A,A',A'',A''') of the conveyor tracks of the return part and the centerlines (B,B',B'',B''') of the conveyor tracks of the top part are laterally offset relative to each other, so that the returning portions of conveyor chains running next to each other can be located in the same horizontal plane.

## Description

This invention relates to a multiple bend segment for a chain conveyor comprising conveyor chains movable over a plurality of parallel conveyor tracks including at least one bend zone, the bend segment consisting of a number of adjacent, substantially U-shaped plastic sections forming one whole, the legs of each U-shaped section forming the rails over which a chain can move, the chain comprising links each having a substantially rectangular bearing surface and a connection system situated below the bearing surface, the successive links being hingedly coupled to each other by the connection systems, the bend segment further comprising, for each of the conveyor chains, a return part located under a respective U-shaped section and having a substantially inverted U-shape, the legs of the U including slots for guiding the bearing surfaces of the returning portion of the conveyor chain.

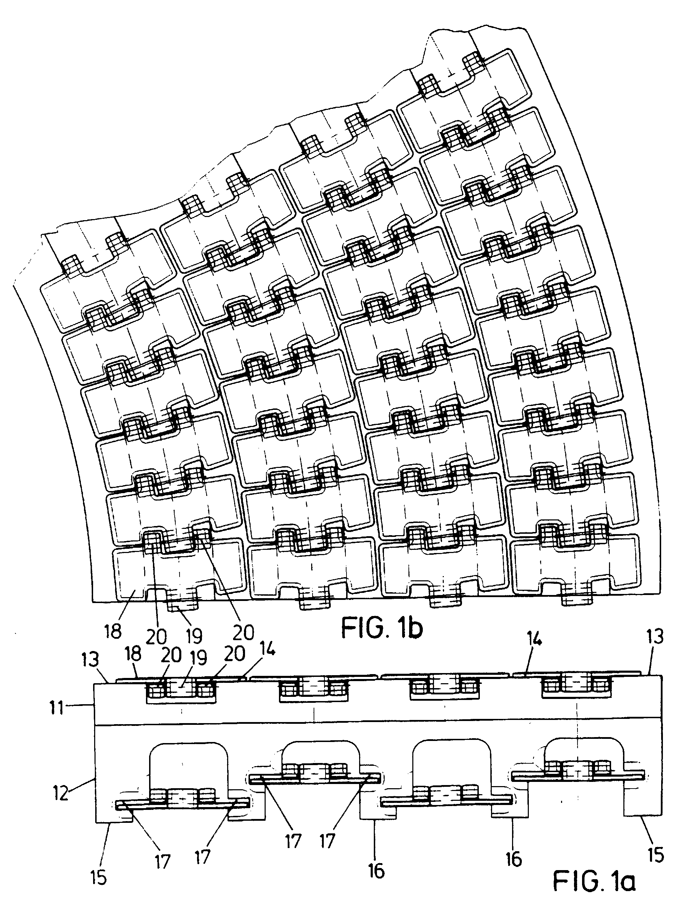

Such a bend segment is known, for instance, from Dutch patent application 8802424 and can be designed in single or multiple form, that is, for a single conveyor chain or for several conveyor chains next to each other. On the rails of the top part run the bearing surfaces of the chain links, while the side edges of these bearing surfaces, in the case of a multiple conveyor, run next to each other in closely spaced relation and are sometimes separated by an inverted T-shaped wear strip. In the legs of the return part, slots are provided to support and guide the bearing surfaces of the returning portion of the conveyor chain. This involves the problem that if the side edges of the bearing surfaces of the chain links in the top part are located close to each other, the legs of the return part that are associated with pairs of adjacent conveyor chains do not comprise sufficient material for the guide slots to be provided side by side. Heretofore, a solution to that problem was sought in providing the guide slots for adjacent conveyor chains at different, staggered levels in the legs of the return part. Such a conventional bend segment is shown, for a fourfold conveyor, in Figs. 1a and 1b. One of the drawbacks of this known solution is that owing to the staggered arrangement of the guide slots, the legs of the return part must have a relatively great height, which renders the return part costly because of the additional material needed.

The object of the invention is to provide a solution to the problem mentioned, which makes it possible to reduce the height of the bend segment considerably, without adversely affecting the guidance of the returning portion of the conveyor chain.

To that effect, the invention provides a multiple bend segment of the above-mentioned type, characterized in that the centerlines of the conveyor tracks of the return part with respect to the centerlines of the conveyor tracks of the top part are laterally offset relative to each other. What can thus be accomplished, in a preferred embodiment, is that the guide slots for the returning portions of conveyor chains running side by side are located in the same horizontal plane.

Through the feature according to the invention, it has, surprisingly, been found possible, by displacing the lower part of the chain laterally relative to the corresponding upper part, to create sufficient space in the return part of a multiple bend to enable the guide slots to be arranged next to each other. This makes it possible to reduce the height of the return part, which is, for instance, 63 mm in the known bend segments, to 36 mm, which yields a material saving of more than 40% and also considerably shortens the duration of the milling operation for manufacturing the return part, yielding gain of time and gain because of lesser tool wear.

Hereinafter, the invention will be further discussed on the basis of an exemplary embodiment, with reference to the drawing, in which:
Fig. 1a is a cross section of a fourfold bend segment according to the prior art;
Fig. 1b is a top plan view of the bend segment according to Fig. 1a; and
Fig. 2 shows a fourfold bend segment according to the invention.

In the figures, like parts are designated by the same reference numerals, but preceded by the number of the figure.

Fig. 1a, b shows a bend segment according to the prior art, consisting of a top part 11 and a return part 12. The top part in fact consists of a series of adjacent U-shaped sections, the legs 13, 14 of each U forming the guide for the underside of the bearing surface of the conveyor chain, of which a number of links are shown diagrammatically in the figure. The chain links each comprise a substantially rectangular bearing surface 18, a central hinge loop 19 and two outer hinge loops 20. In two successive links, the central hinge loop 19 of one link is disposed between the two hinge loops 20 of the other link and connected thereto through a hinge pin. Pairs of adjacent U-shaped sections have a common central leg 14 on which the bearing surfaces of two adjacent chains run in close juxtaposition, optionally with an inverted T-shaped wear strip between them.

As appears from Fig. 1a, the return part similarly consists of a number of juxtaposed, inverted U-shaped sections, with legs 15, 16, the adjacent legs 16 of adjacent U-shaped sections being shared by two adjacent conveyor tracks. Provided in the legs are slots 17 for supporting and guiding the bearing surfaces of the chain links. To avoid a situation where the slots in adjacent legs merge into each other, or too little material is left between such adjacent slots, the slots are provided at different levels. In practice, this requires the return part to have a height of about 63 mm.

Preferably, the various U-shaped sections of the top part and/or return part are all formed in a plastic plate by milling operations. However, a side-by-side arrangement of loose bend segments consisting of one or more U-shaped sections is also possible.

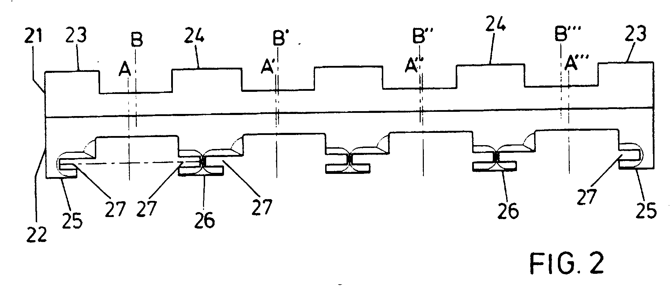

Fig. 2 is a cross section of a bend segment according to the invention, showing, by way of example, a fourfold segment. The top part 21 is identical to the top part 11 according to Fig. 1. The return part, however, is constructed such that the centerlines A, A', A'' and A''' of the conveyor tracks formed by the various inverted U-shaped segments of the return part are offset relative to the respective centerlines B, B', B'' and B''' of the conveyor tracks formed by the corresponding U-shaped segments of the top part. In effect, in this way the chain portions in the return part are shifted laterally relative to the corresponding chain portions in the top part. In the exemplary embodiment, the chain portions in the two inner tracks are shifted in the direction of the inside curve of the multiple bend segment, and the chain portions in the two outer tracks are shifted in the direction of the outside curve. In multiple bend segments having a number of tracks other than four, the shift occurs in a corresponding manner.

Shifting the chain portions in a return part has been found to be possible in practice by virtue of the play always present between the various links of a chain and in the return part of the conveyor. Through the feature according to the invention, it has been found to be possible to maintain a wall thickness of a few millimeters, for instance 3 mm, between the adjacent guide slots in a common leg of two adjacent return part sections, which, in practice, is sufficient to give the return part sufficient strength. Because the guide slots can now be next to each other in one plane, the return part 22 can have a considerably lesser height than the return part 12 according to Fig. 1. In the example, the height can now be reduced from 63 to 36 mm.

The maximum extent of relative shift of the respective centerlines of the bend segment sections in the top part and the return part, respectively, which is present both in the innermost and in the outermost section of the bend segment, depends *inter alia* on the number of tracks which the bend segment consists of, and can vary in practice, for instance from 1.5 mm in a twofold bend segment to 10.5 mm in an eight-fold bend segment.

## Claims

1. A multiple bend segment for a chain conveyor comprising conveyor chains movable over a plurality of parallel conveyor tracks including at least one bend zone, the bend segment consisting of a number of adjacent, substantially U-shaped plastic sections forming one whole, the legs of each U-shaped section forming the rails over which a chain can move, the chain comprising links each having a substantially rectangular bearing surface and a connection system situated below the bearing surface, the successive links being hingedly coupled to each other by the connection systems, the bend segment further comprising, for each of the conveyor chains, a return part located under a respective U-shaped section and having a substantially inverted U-shape, the legs of the U including slots for guiding the bearing surfaces of the returning portion of the conveyor chain, characterized in that the centerlines of the conveyor tracks of the return part with respect to the centerlines of the conveyor tracks of the top part are laterally offset relative to each other.

2. A multiple bend segment according to claim 1, characterized in that the guide slots for the returning portions of conveyor chains running next to each other are located in the same horizontal plane.
